# EUROPEAN PATENT SPECIFICATION

(11) **EP 2 225 932 B1**
(45) Date of publication and mention of the grant of the patent: **23.01.2013**
(21) Application number: 09305192.8
(22) Date of filing: 03.03.2009
(51) Int. Cl.: A01G 1/00, C05F 11/00

(54) **Method for enhancing market garden plant growth**
Verfahren zur Verbesserung des Pflanzenwachstums im Gartenbau
Procédé d'amélioration de la croissance de plantes de jardin et de marché

(43) Date of publication of application: 08.09.2010
(73) Proprietor: Institut de Recherche pour le Développement ( IRD), 13572 Marseille Cédex 02 (FR)
(72) Inventor: Duponnois, Robin, F-71640 MERCUREY (FR); Sanon, Arsène, F-71640 MERCUREY (FR); Leyval, Corinne, F-54000 NANCY (FR); Berthelin, Jacques, F-54000 NANCY (FR)
(74) Representative: Grosset-Fournier, Chantal Catherine

(56) References cited:
- DATABASE WPI Week 200758 Thomson Scientific, London, GB; AN 2007-604940 XP002540266 & CN 1 943 306 A (ZHOU T) 11 April 2007 (2007-04-11)
- DATABASE WPI Week 200301 Thomson Scientific, London, GB; AN 2003-013747 XP002540267 & RU 2 190 315 C2 (UNIV N OSETINSK) 10 October 2002 (2002-10-10)
- RINAUDO G ET AL: "Sesbania rostrata green manure and the nitrogen content of rice crop and soil" SOIL BIOLOGY AND BIOCHEMISTRY, PERGAMON, OXFORD, GB, vol. 15, no. 1, 1 January 1983 (1983-01-01), pages 111-113, XP025476395 ISSN: 0038-0717 [retrieved on 1983-01-01]
- GRUBBEN G.J.H., DENTON O.A. (EDS): "PROTA : PLANT RESOURCES OF TROPICAL AFRICA 2 : VEGETABLES" 2004, PROTA FOUNDATION / BACKHUYS PUBLISHERS / CTA , WAGENINGEN, NETHERLANDS , XP002540265 * page 88, left-hand column, paragraph USES *

## Description

The present invention deals with market plant cultivation. It relates to a new method for enhancing market garden plant growth and to a new biofertilizing composition.

Varied and considerable impacts on native flora and fauna can result from exotic plant species that invade natural ecosystems and public lands. Exotic plants may become invasive in their introduction geographical area through a number of biological processes such as higher performance in their introduced ranges, release from native, specialized antagonists, direct chemical interference (allelopathic effect) with native plant species and resistance variability of native plant communities to invasion. These disturbances of the native plant ecosystem resulting from exotic plant invasion modify succession, dominance, community structure and composition, and vegetation dynamics. It has also been suggested that exotic plants could disrupt mutualistic associations within native microbial communities. Terrestrial ecosystems functioning and stability are mainly determined by plant specific richness and composition and, accumulating evidences indicated that plant species dynamics are strongly interlinked with soil microbiota. Therefore, one of the main success ways of exotic invasive plant species might result from these exogenous organisms-mediated modifications in the structure and functionalities of soil microbial communities.

Among soil microbial communities, Arbuscular Mycorrhizal (AM) fungi form an important component of the sustainable soil-plant system. AM symbiosis influences plant development as well as plant communities' diversity and could affect relationships between plants. Another important group of mutualists are the nitrogen-fixing bacterial associates of legumes collectively called Rhizobia. Rhizobia induce root nodules and fix atmospheric nitrogen into ammonium that is transferred to their leguminous hosts. This rhizobial symbiosis is important because nitrogen is one of the main nutrients that limits plant productivity in natural ecosystems, especially in tropical environmental conditions. More recently, it has been demonstrated that symbiotic interactions between legumes and rhizobia contribute to plant productivity, plant community structure and acquisition of limiting resources in legume-rich grassland communities (van der Heijden *et al.,* 2006).

*Amaranthus viridis* L. (Amaranthaceae) is an annual weed native from Central America. This plant is now largely widespread in all warm parts of the world including regions between 30°S and 30°N. *Amaranthaceae* are characterized by their nitrophily and the C4 photosynthesis pathway. These physiological traits are advantageous in man-made habitats, under conditions of fertilization and/or irrigation. Furthermore, *A. viridis* and other species of *Amaranthus* are also characterized by an extended period of germination, rapid growth, and high rates of seed production that might facilitate plant invasiveness. In Pakistan where *A. viridis* is considered as an invasive plant species, Hussain et al. (J. Weed Sci. Res. (2003) 9: 117-124) observed that aqueous extracts from shoots, rain leachate, litter and root exudation significantly reduced the germination and seedlings growth of pearl millet (*Pennisetum americanum*)*,* wheat (*Triticum aestivum*) and corn (*Zea mays*). Moreover, they also found that shoot extract of this exotic plant retarded the development of meristematic cells of test species underlying allelopathic potential of *A. viridis* against crops. Of the 50 species of the genus *Amaranthus,* nine of them including *A. viridis,* have already been considered invasive and noxious in the United States and Canada (USDA Plant Database). In Senegal, *A. viridis* was reported in agrosystems, and increasingly invaded fallow lands, areas of pasture, domestic waste deposit areas. Its growth is positively correlated to soil fertility (e.g. organic matter and nitrogen contents) (Le Bourgeois & Merlier, (1995), Adventrop. Les adventices d'Afrique soudano-sahélienne. Montpellier, France. CIRAD-CA (ed). 640 p). *A. viridis* by invading large areas compromised native plant (grass-, shrub- and woodland) growth. The mechanisms underlying *Amaranthus viridis* capacity to enter and proliferate within sahelian native plant communities have not yet been investigated. Amongst native threatened plants, sahelian *Acacia* species represent keystone trees in Sub-Saharan arid and semiarid areas. Indeed, they are particularly adapted to these regions harsh climatic conditions and some of them prevent wind and rain erosion, control sand dunes, are sources of wood and provide fodder for browsing livestock. These legume trees have high economical value and, their rhizobial symbiosis improves soil fertility.

There is a long history of soil fertilization. The term 'fertilization' includes the addition of elements or other materials to the soil to increase or maintain plant yields. Fertilizers may be organic or inorganic. Organic fertilizers are usually manures and waste materials which in addition to providing small amounts of growth elements also serve as conditioners for the soil. Commercial fertilizers are most often inorganic. Methods of applying fertilizers vary widely and depend on such factors as crop type, stage of growth, application rates, physical and chemical properties of the fertilizer, and soil type. One of the major problems with these types of chemical fertilization is the fact that there are harmful effects of chemical fertilizers and their impact on the environment through nitrate contamination of ground and run-off waters. Biofertilizers (fertilization compositions comprising microbes) have been identified as an alternative to chemical fertilization to increase soil fertility and crop production using sustainable farming. The use of nitrogen-fixing bacteria provides plants with nitrogen compounds needed for growth and there is increasing evidence that other bacteria provide plant hormones to enhance growth. Although said biofertilizers give good results, there is still a need for biofertilizing agents which are easy to use and not too expensive

By examining the potential for soil-mediated effects resulting from *A. viridis* establishment, with an emphasis on effects mediated *via* symbiotic soil microorganisms such as Arbuscular Mycorrhizal (AM) fungi and Rhizobia, to affect the growth of several sahelian *Acacia* species (*Acacia raddiana* thorns, *A. senegal* (L.) Willd. Syn., *A. seyal* Del., *A. nilotica* Willd. ex Del. and *Faidherbia albida* (Del.) A. Chev), the most representative *Acacia* species in West Africa the inventors surprisingly discovered that *A. viridis* has beneficial effects on chemical and functional features of the soil.

RU 2 190 315 C2 (UNIV N OSETINSK) and GRUBBEN G.J.H DENTON O.A. (EDS): "PROTA : PLANT RESOURCES OF TROPICAL AFRICA 2 : VEGETABLES", 2004, PROTA FOUNDATION / BACKHUYS PUBLISHERS / CTA, WAGENINGEN, NETHERLANDS disclose the use of *Amaranthus spp* as green manure.

Consequently an object of the instant invention is a method of enhancing the growth of market garden plants belonging to the non leguminous plant species, the growth of which is independent of *Rhizobia* and not highly dependent or independent of arbuscular mycorrhizal fungi, said method comprising the step of cultivating said plants in a mixture of compost and of a soil where *Amaranthus* spp was beforehand grown.

In an advantageous mode of realisation, said method may comprise the following steps:
i. recovering the soil wherein *Amaranthus* spp. is growing,
ii. mixing said soil with compost,
iii. planting the market garden plant in said mixture,
iv. letting said market plant growing and
v. harvesting it.

As example of *Amaranthus spp* according to the invention, may be cited *Amaranthus viridis, Amaranthus albus,* Amaranthus blitoides, *Amaranthus blitum, Amaranthus caudatus, Amaranthus cruentus, Amaranthus gangeticus, Amaranthus graecizans, Amaranthus hybridus, Amaranthus oleraceus, Amaranthus paniculatus, Amaranthus retroflexus, Amaranthus salicifolius, Amaranthus spinosus* and *Amaranthus tricolour.*

The soil wherein the *Amaranthus spp* like *A. viridis* are growing may be issued from natural growing *Amaranthus spp* or from cultivated ones.

According to the invention, the market garden plants are selected from the group comprising non leguminous plant species belonging to plant species not highly dependent to the mycorrhizal symbiosis like tomato, etc.. and all the nonmycotrophic plant species like cabbage, cauliflower, etc). The following plants may be cited for example: beets, onions, leeks, radishes, cabbages, tomatoes, salads, strawberries.

According to the invention, the ratio compost/soil is comprised between 90/10 and 95/5 (v/v).

Also disclosed is the use of *Amaranthus* spp, in particular *A. viridis* as biofertilizing agent or enhancer of the growth of market garden plants belonging to the non leguminous plant species, the growth of which is independent of *Rhizobia* and not highly dependent or independent of arbuscular mycorrhizal fungi,

Still another object of the invention is a biofertilizing composition comprising a mixture of compost and of a soil where *Amaranthus* spp, in particular *A. viridis* was beforehand grown.

According to the invention, the ratio compost/soil in the biofertilizing composition is comprised between 90/10 and 95/5 (v/v).

Another object of the invention is a method for preparing a biofertilizing composition comprising the step of:
i. recovering the soil wherein *Amaranthus* spp, in particular *A.veridis* is growing,
ii. mixing said soil with compost and
iii. storing it until use.

The following examples 1 and 2 and figures 1 to 6 illustrate the invention.
Figure 1 illustrates the positive effects of *A. viridis* on chemical characteristics and enzymatic activities of soils. ⁽¹⁾ Results are expressed as Mean ± standard error; ⁽²⁾ Data in the same line followed by the same letter are not significantly different according to the Newman-Keul's test (p < 0.05).
Figure 2 illustrates the TTGE patterns of the total bacterial communities from the soils invaded or not by *A. viridis* plants obtained according to example 1.
Figures 3 the PCA (Principal Component Analysis) of the band intensity data of soils invaded or not with *A. viridis* from figure 2.
Figure 4 illustrates the influence of *A. viridis* on the structure of AM fungal communities and hyphal length measured according to example 1. ⁽¹⁾ Results are expressed as Mean ± standard error; ⁽²⁾ Data in the same line followed by the same letter are not significantly different according to the Newman-Keul's test (p < 0.05).
Figure 5 shows mycorrhizal dependency assessment of *A. viridis* plants on a disinfected soil inoculated with the AM fungus *G. intraradices.* ⁽¹⁾ Data in the same line followed by the same letter are not significantly different according to the Newman-Keul's test (p < 0.05).
Figure 6 shows the effect of soils invaded by *A. viridis* (Av+) or not (Av-), mixed with a compost at different concentrations on the growth of tomatoes plants after 2 months of greenhouse culture. Data in the same line followed by the same letter are not significantly different according to the Newman-Keul's test (p<0.05).

### EXAMPLE 1: Chemical characteristics and enzymatic activities of soils invaded or not by Amaranthus viridis plants

### 1.1. MATERIALS AND METHODS

### 1.1.1. Experimental ecosystem area and soil sampling

The experimental area was located in the IRD experimental station of Bel Air (14° 43' N, 17° 26' W) (Dakar, Senegal). The climate is semi-arid with a long dry season (6-8 months), a mean annual temperature 24°C and a mean annual rainfall of 300 mm. The plant cover was sparse and degraded. The vegetation is composed of grasses (*Alysicarpus ovalifolius* L., Fabaceae; *Boerhavia diffusa* L., Nyctaginaceae; *Commelina forskalaei* Vahl, Commelinaceae, *Eragrostis tremula* L., Poaceae; etc), tree species (*Acacia* spp, Mimosaceae; *Leucaena* spp, Mimosaceae; *Balanites aegypticum,* Zygophyllaceae) and *Amaranthus viridis* was highly abundant. The average soil physico-chemical characteristics were as follows: pH (H₂O) 8.2; clay (%) 5.2; fine silt (%) 1.8; coarse silt (%) 2.0; fine sand (%) 66.5; coarse sand (%) 24.5; carbon (%) 0.36; total nitrogen (%) 0.44; soluble phosphorus (mg kg⁻¹) 39.6. A total of 10 sampling (1 x 1 m quadrat) plots were distributed in the studied area according to the presence or not of *A. viridis* plants (5 quadrats with a history of *A. viridis* and 5 quadrats without a history of *A. viridis* but covered with grasses). Then the soil (0-15 cm depth) of each quadrat was collected, mixed, and sieved (mesh size, < 2 mm) to remove plant root materials and kept at 4°C before further analysis. All soil samples were characterized by measuring total C, total N, total P, and soluble P contents according to the methods disclosed by Olsen *et al.,* (1954) p. 19. U.S. Department of Agriculture circular, vol. 939. U.S. Department of Agriculture, Washington, DC.; Aubert, (1978) Edition CRDP, Marseille, p. 360) in the LAMA (Laboratoire des Moyens Analytiques) (Certifié International Standard for Organization 9001, version 2000, Dakar, Senegal; US Imago [Unité de Service Instrumentations, Moyens Analytiques, Observatoires en Géophysique et Océanographie], Institut de Recherche pour le Développement [www.lama.ird.sn]).

### 1.1.2. Measurement of soil microbial functionalities

Total microbial activity in soil samples was measured using the fluorescein diacetate (3', 6',- diacetylfluorescein [FDA]) hydrolysis assay according to the method of Alef (In: Alef, K., Nannipieri, P. (Eds), (1998), Methods in applied soil microbiology and biochemistry. Academic Press, London, pp. 232-233) in which fluorescein liberated was assayed colorimetrically at 490 nm, after 1 h of soil incubation. The total microbial activity was expressed as mg of product corrected for background fluorescence per hour and per gram of soil. Deshydrogenase activity was measured by absorbance readings at 490 nm following the method of Prin et al. (Agron Trop (1989) 44: 13-19) and Schinner et al. (in Methods in soil biology (1996) Springer-Verlag, Berlin, 426 pp.) with iodo nitro-tetrazolium (INT) as an artificial electron acceptor to form INT-Formazan (INTF).

### 1.1.3. Assessment of soil microbial structure

### 1.1.3.1. Bacterial community 16S gene copy number quantification

Real-Time PCR assays were used to quantify the 16S rRNA gene copy number in soil samples according to Cébron et al. (J Microbiol Meth (2008) 73:148-159). Total DNA from 0.5 g of soil samples were extracted using a bead beating protocol (Cébron *et al.,* (2008) previously cited). Samples were mixed with glass beads, 800 µL of extraction buffer (100 mM Tris, 100 mM EDTA, 100 mM NaCl, 1% [wt/vol] polyvinylpolypyrrolidone, 2% [wt/vol] sodium dodecyl sulfate, pH 8.0) and 40 µL of 6% CTAB in 5 mM CaCl₂. After bead beating on a horizontal grinder Retsch (Roucaire Instruments Scientifiques, France), DNA was extracted using phenol-chloroform-isoamyl alcohol (25/24/1) and washed twice with chloroform-isoamyl alcohol (24/1). DNA precipitation was carried out using isopropanol and then resuspended in 100 µL Tris-HCl buffer (10 mM, pH 8) and stored at -20°C.

Real-Time PCR experiment was conducted in an iCycler iQ (Bio-Rad) associated with iCycler Optical System Interface software (version 2.3; Bio-Rad). Real-Time PCR were performed in 25 µL reaction volumes containing 1X iQ SYBR Green Supermix (Bio-Rad), 0.4 µM of each primers (968f and 1401r), 0.9 µg µL⁻¹ bovine serum albumin (BSA), 0.5 µL dimethyl sulfoxide (DMSO), 0.1 µL of T4 bacteriophage gene 32 Product (QBiogene) and 1 µL of template DNA or distilled water (negative control). 10-time dilution series of plasmid standard with known concentration from 10⁸ to 10¹ target gene copies µL⁻¹ were used for quantification calibration curve. The following temperature profiles were used for rDNA amplifications: step one heated to 95°C (5 min), followed by 50 cycles of 4 steps of 30 s of denaturation at 95°C, 30 s at the primers specific annealing temperature (56°C), 30 s of elongation at 72°C and the SYBR Green I signal intensities were measured during a 10 s step at 80°C. The final step consisted of 7 min at 72°C. Then a melting curve analysis was performed by a final step by measuring the SYBR Green I signal intensities during a 0.5°C temperature increment every 10 s from 51°C to 95°C.

### 1.1.3.2 Temporal Thermal gradient gel electrophoresis (TTGE) analysis

The eubacterial primer set, 968f-GC (with the GC clamp described by Muyzer et al., Appl Environ Microb (1993) 59: 695-700) and 1401r, was used to amplify a 475-bp fragment of the 16S rDNA (Felske et al., Appl Environ Microbiol (1998) 64: 4581-4587; Heuer et al., Appl Environ Microbiol (1999) 65: 1045-1049). For each amplification reaction, 1 µL of crude DNA extract was added to 49 µL of PCR mix consisting of 50 mM buffer, 3 mM MgCl₂, 0.2 mM deoxynucleoside triphosphates (dNTP), 3 mg mL⁻¹ of bovine serum albumine (BSA), 1.5 µL of dimethyl sulfoxide (DMSO), 2 µM (each) primer, and 5 U of Taq polymerase (FastStart; Roche Diagnostic). DNA was amplified in an iCycler (Bio-Rad) with the following amplification program: 94°C for 5 min (1 cycle); 94°C for 40 s, 56°C for 30 s, and 72°C for 40 s (38 cycles); and 72°C for 5 min (1 cycle). PCR products, stained with ethidium bromide, were visualized under UV light after electrophoresis in a 1% (w/v) agarose gel to verify the size and quantity of amplified PCR products.

TTGE was realized with Dcode universal mutation detection system (Bio-Rad Laboratories) with conditions modified from Corgié et al. (Appl Environ Microbiol (2004) 70: 3552-3557. The polyacrylamide gels (6% [wt/vol] acrylamide, 0.21% [wt/vol] bisacrylamide, 7 M urea, 1.25X Tris-acetate-EDTA, and 0.2% [vol/vol] glycerol) were allowed to polymerize for 1 h. DNA sample (10 µL) were separated by electrophoresis in 1.25X Tris-acetate-EDTA at a constant voltage (100 V), with a temperature gradient from 57 to 67°C (temperature increment of 2°C/h). After electrophoresis, gels were stained with ethidium bromide and numerized under UV light.

Quantification of band intensity was performed using Gel Doc (Biorad) coupled to the Quantity One software. For each profile, the intensity of the bands was summed and the relative intensity of each band was calculated in order to assess the abundance of the species in the initial sample (Marschner & Baumann (2003) Plant Soil 251: 279-289).

### 1.1.3.4. Assessment of AM fungus community structure

AM hyphal length was measured on membrane filters according to Jakobsen et al. (New Phytol (1992) 120: 371-380). The total hyphal length was estimated using the Gridline intersect method (Hanssen et al., Oikos (1974) 25: 102-107). The AM fungi hyphae were distinguished from hyphae of other soil fungi following the morphological criteria described by Nicolson (Trans Brit Mycol Soc (1959) 42: 421-438). AM fungal spores were also extracted from soil samples by wet sieving and decanting, followed by sucrose centrifugation. After centrifugation, the supernatant was poured through a 50-mm sieve and rinsed with tap water. Spores were counted under a stereomicroscope and grouped according to morphological characteristics. The relative abundance of each fungal type was calculated per 100 g of dry soil. Spore size and color were assessed in water under a stereomicroscope (Olympus SZ H10 research stereomicroscope) whereas spore wall structures and other attributes were observed on permanent slides prepared according to Azcon-Aguilar et al. (Biol Fertil Soils (2003) 7: 28-31) under a microscope connected to a computer with digital image analysis software. Morphotype classification to the genus level and, when possible to the species, was mainly based on morphological features such as color, size, wall structure and hyphal attachment (Morton & Benny, Mycotaxon (1990) 37: 471-491; INVAM, (1997) International Culture Collection of (Vesicular) Arbuscular Mycorrhizae. http://www.invam.caf.wvu.edu/).
Relative abundance of each fungal species in each treatment was calculated.

### 1.1.4 Greenhouse experiments

### 1.1.4.1. Assessment of A. viridis mycorrhizal dependency

The AM fungus *Glomus intraradices,* Schenk and Smith (DAOM 181602, Ottawa Agricultural Herbarium) was propagated on maize (*Zea mays* L.) for 12 weeks under greenhouse conditions in calcined clay. Maize plants were uprooted, gently washed, and colonized roots were hand-cut into 1-3 mm long pieces, bearing around 250 vesicles cm⁻¹, each considered as one propagule. To obtain a logarithmic scale of inoculum density (0, 3, 30, 100 propagules per 100 g soil), AM root pieces were counted under a dissecting microscope and, for each inoculum rate, the number was adjusted to 100 root pieces per 100 g of soil with non-mycorrhizal maize roots, prepared as above. Root pieces were then thoroughly mixed with a disinfected sandy soil (120°C, 60 min) whose physicochemical characteristics were as follows: pH (H₂O) 5.3; clay (%) 3.6; fine silt (%) 0.0; coarse silt (%) 0.8; fine sand (%) 55.5; coarse sand (%) 39.4; carbon (%) 0.17; nitrogen (%) 0.02; total P (mg kg⁻¹) 39 and Olsen P (mg kg⁻¹) 4.8.

Seeds of *A. viridis* collected from the experimental area, were surface-sterilized with 1% NaOCl for 15 min and rinsed with demineralized water. They were pre-germinated for 2 days in Petri dishes on humid filter paper at 25°C in the dark. The germinating seeds were used when rootlets were 1-2 cm long. For each inoculum density, plastic pots (5.5 cm diameter; 6 cm high) were filled with 100 g of soil containing the required number of AM propagules, and one pre-germinated seed of *A*. *viridis* was planted per pot. Pots were arranged in a randomized complete block design with six replicates per treatment. They were placed in greenhouse conditions (30°C day, 20°C night, 10-h photoperiod) and watered daily with deionized water without addition of nutrients. After 3 months of culture, the plants were harvested, and the oven-dried weight (1 week at 65°C) of shoot was recorded. The root systems were gently washed, cleared and stained according to the method of Phillips & Hayman (1970). About 50 1-cm root pieces were observed per plant under a microscope (magnification, ×250). The extent of mycorrhizal colonization was expressed as [the number of mycorrhizal root pieccs]/[total number of observed root pieces]×100. Remaining roots were oven-dried (1 week at 65°C) and weighed.

### 1.2. Results

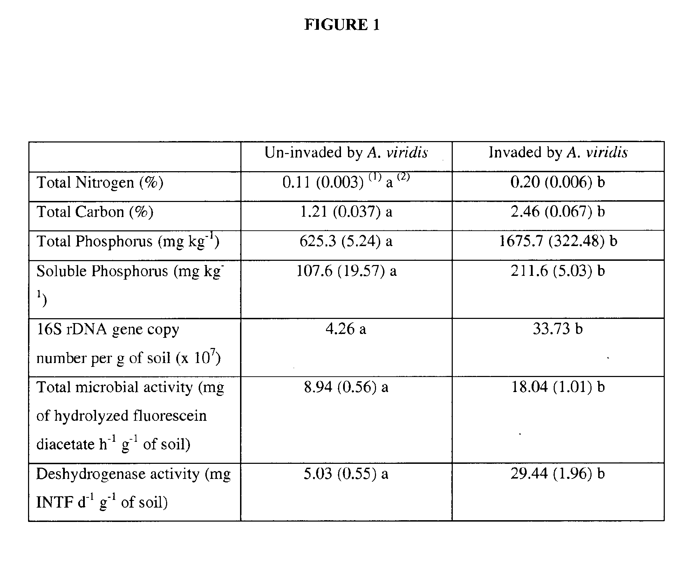

Soil nitrogen, carbon, total phosphorus and soluble phosphorus contents were significantly higher in the soil collected from *A. viridis*-invaded area than in the soil sampled from the un-invaded area (Figure 1). The same positive effects of *A. viridis* were observed on total microbial activity (FDA) and deshydrogenase activity (Figure 1).

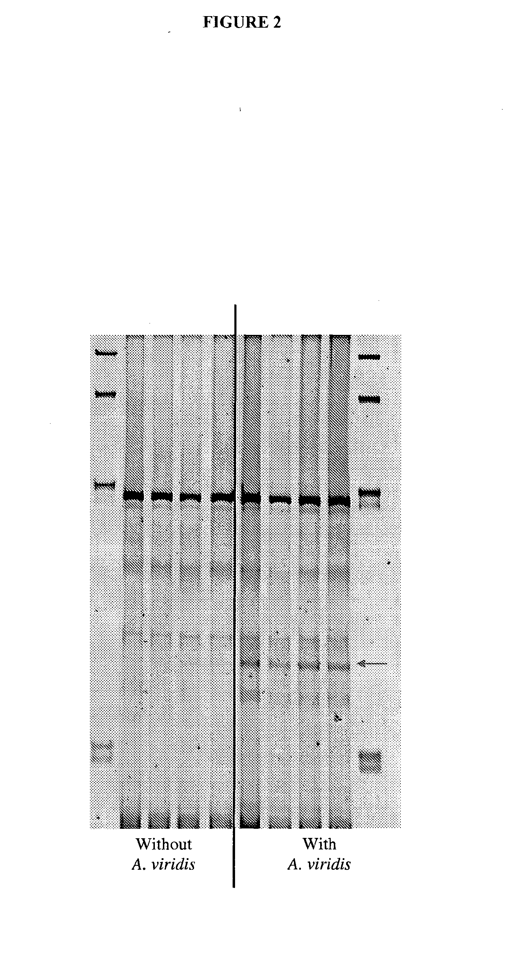

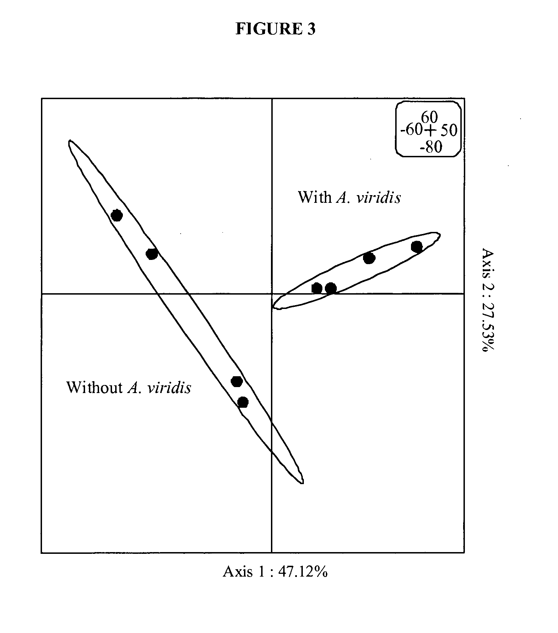

The total bacterial communities' structures from both soils were assessed by TTGE analysis of 16S rDNA (Figure 2). The TTGE gel displayed numerous bands of various intensities that resulted from differences between the 16S rDNA gene sequences of different bacterial species. The two soils shared most of the TTGE bands, suggesting that common bacterial population colonized these soils. However, one bacterial species seemed to be more represented in soils invaded by *A. viridis.* Ordination plots generated by principal component analysis of band intensity data (representation of the two first axes, about 75% of the total inertia) clearly separated the soils on the basis of their origin (Figure 3). The four replicates of soil collected from invaded sites presented a very close group in comparison to soils sampled from un-invaded sites, indicative of strong disturbance in recipient soil bacterial populations and therefore, their homogenization. Modifications occurred in bacterial community structure were accompanied by shifts in the community density in soil samples.

The data from the quantification of 16S rRNA gene copy number indicated significant stimulation of bacterial population in soil invaded by *A. viridis.* The 16S rDNA copy number averaged 33.7 x10⁷ in soil collected from invaded sites and about 4.3 x 10⁷ in un-invaded soil (Figure 1).

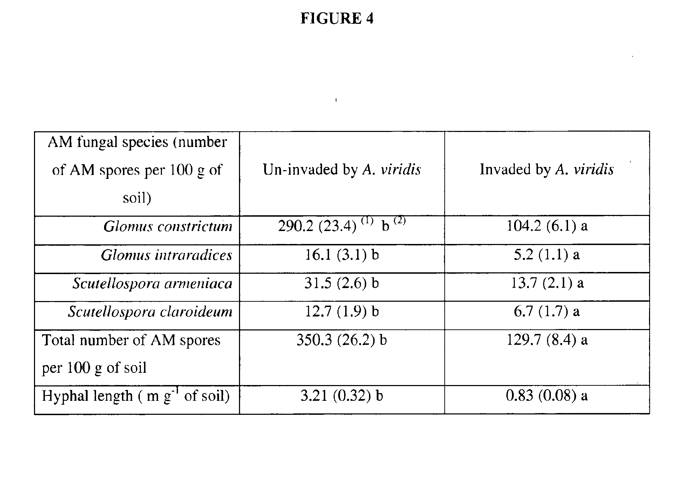

The total number of AM spores as well as the length of external hyphae found in the un-invaded soil was significantly higher than that recorded in the invaded soil (Figure 4). Two genera (*Glomus* and *Scutellospora*) and 4 species (*G. constrictum, G. intraradices, S. armeniaca, S. claroideum*) were present in both soil origins but their abundance was significantly higher in the un-invaded soil (Figure 4).

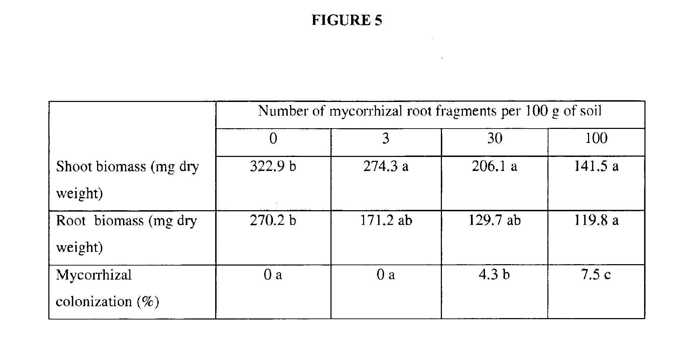

Mycorrhizal structures were observed on *A. viridis* root systems at the highest inoculum rates (30 and 100 AM propagules per 100 g of soil) (Figure 5). Plant growth was negatively linked with the rates of AM inoculation (*r²* = 0.34, *p* = 0.0028).

### EXAMPLE 2 Measuring of the biofertilizing properties of A. veridis on tomatoes

### 1. Material and methods

Samples of quadrat wherein *A. veridis* was growing (Av+) and whithout *A. veridis* (Av-) were collected and each sample was mixed with compost, usually used local horticulture and vegetables gardening (mixture of sand and litter from Filao) in a quantity of 5 % to 10% (v/v). These differents mixtures were distributed on multi-alveolar plates (one cell = 75 ml) wherein was planted a tomato crop à raison one transplant per cell. Plates were place in a greenhouse (mean temperature: 20°C; mean sunligt duration: 10 hours). Transplants were harvested after 2 months of culture and the shoot and root biomasses (dry weights) were measured after 1 week at 65°C. Data were statistically treated by the Newman-Keul's test (p < 0,05).

### 2. Results

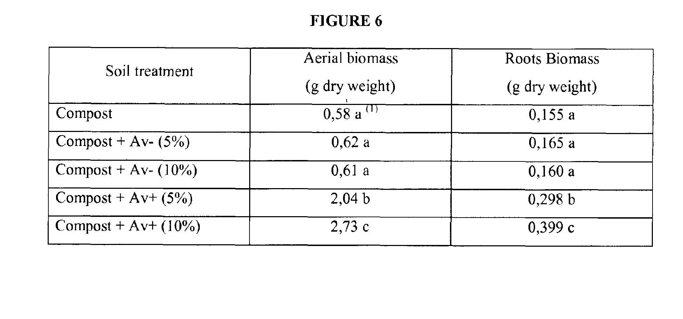

They are given in figure 6.

Compost modified with soil sample under *A. viridis* stimulates the growth of tomatoe plants, This stimulating effect is statistically significant for a ratio 5 volumes of soil for 95 volumes of compost and more particularly when the soil is added in a ratio of 10 volumes of soil for 90 volumes of compost.

In view of said results, a mixture of compost and of soil wherein *Amaranthus* spp, in particular *A. viridis* has grown beforehand may be used to realize sowing brick which may be used to grow garden market plants presenting low dependence for their growth from the mycorhizal symbiosis.

## Claims

1. Method of enhancing the growth of market garden plants belonging to the non leguminous plant species, the growth of which is independent of *Rhizobia* and not highly dependent or independent of arbuscular mycorrhizal fungi, said method comprising the step of cultivating said plants in a mixture of compost and of a soil where *Amaranthus spp* was beforehand grown.

2. The method according to claim 1 wherein the *Amaranthus spp* is selected from the group comprising *Amaranthus viridis, Amaranthus albus,* Amaranthus blitoides, *Amaranthus blitum, Amaranthus caudatus, Amaranthus cruentus, Amaranthus gangeticus, Amaranthus graecizans, Amaranthus hybridus, Amaranthus oleraceus, Amaranthus paniculatus, Amaranthus retroflexus, Amaranthus salicifolius, Amaranthus spinosus* and *Amaranthus tricolour.*

3. Method according to any one of claims 1 and 2 comprising the following steps:
i.recovering the soil wherein *Amaranthus spp is* is growing,
ii.mixing said soil with compost,
iii.planting the market garden plant in said mixture,
iv. letting said market plant growing and
v.harvesting it.

4. Method according to any one of claims 1 to 3 wherein the market garden plant is selected in the group comprising non leguminous plant species not highly dependent of arbuscular mycorrhizal fungi and all the nonmycotrophic plant species.

5. Method according to any one of claims 1 to 4 wherein the ratio compost/soil is comprised between 90/10 and 95/5 (v/v).

6. Biofertilizing composition comprising a mixture of compost and of a soil where *Amaranthus spp* was beforehand grown.

7. Biofertilizing composition according to claim 6 wherein the ratio compost/soil is comprised between 90/10 and 95/5 (v/v).

8. Method for preparing a biofertilizing composition according to any one of claims 6 and 7 comprising the step of:
i.recovering the soil wherein *Amaranthus spp* is growing
ii. mixing said soil with compost
iii. storing it until use.

## Patentansprüche

1. Verfahren des Verstärkens des Wachstums von Marktgartenpflanzen, die zu den nicht-leguminösen Pflanzenarten zählen, deren Wachstum von Rhizobia unabhängig und von arbuskulären Mykorrhizapilzen nicht stark abhängig oder unabhängig ist, wobei das Verfahren den Schritt des Kultivierens der Pflanzen in einem Gemisch aus Kompost und einer Erde umfasst, in der zuvor *Amaranthus spp.* gewachsen ist.

2. Verfahren nach Anspruch 1, wobei der *Amaranthus spp* aus der Gruppe umfassend *Amaranthus viridis, Amaranthus albus, Amaranthus blitoides, Amaranthus blitum, Amaranthus caudatus, Amaranthus cruentus, Amaranthus gangeticus, Amaranthus graecizans, Amaranthus hybridus, Amaranthus oleraceus, Amaranthus paniculatus, Amaranthus retroflexus, Amaranthus salicifolius, Amaranthus spinosus* und *Amaranthus* tricolour ausgewählt ist.

3. Verfahren nach einem der Ansprüche 1 und 2, umfassend die folgenden Schritte:
i. Wiedergewinnung der Erde, in der *Amaranthus spp.* wächst,
ii. Mischen der Erde mit Kompost,
iii. Einpflanzen der Marktgartenpflanze in das Gemisch,
iv. Wachsenlassen der Marktgartenpflanze und
v. Ernten der Marktgartenpflanze.

4. Verfahren nach einem der Ansprüche 1 bis 3, wobei die Marktgartenpflanze in der Gruppe umfassend nicht-leguminöse Pflanzenarten, die von arbuskulären Mykorrhizapilzen nicht stark abhängig sind, und alle nicht-mykotrophen Pflanzenarten ausgewählt ist.

5. Verfahren nach einem der Ansprüche 1 bis 4, wobei das Verhältnis Kompost/Erde zwischen 90/10 und 95/5 (Vol./Vol.) umfasst.

6. Biodüngerzusammensetzung, umfassend ein Gemisch aus Kompost und einer Erde, in der zuvor *Amaranthus spp.* gewachsen ist.

7. Biodüngerzusammensetzung nach Anspruch 6, wobei das Verhältnis Kompost/Erde zwischen 90/10 und 95/5 (Vol./Vol.) umfasst.

8. Verfahren zum Zubereiten einer Biodüngerzusammensetzung nach einem der Ansprüche 6 und 7, umfassend die folgenden Schritte:
i. Wiedergewinnung der Erde, in der *Amaranthus spp.* wächst,
ii. Mischen der Erde mit Kompost,
iii. Aufbewahren der Biodüngerzusammensetzung bis zum Gebrauch.

## Revendications

1. Méthode pour augmenter la croissance de plantes maraîchères appartenant aux plantes d'espèces non légumineuses dont la croissance est indépendante de *Rhizobia* et n'est pas hautement dépendante ou est indépendante des champignons mycorhiziens arbusculaires, ladite méthode comprenant l'étape de culture desdites plantes dans un mélange de compost et de sol dans lequel *Amaranthus spp* a été préalablement cultivé.

2. Méthode selon la revendication 1, dans laquelle Amaranthus spp est sélectionné parmi le groupe comprenant *Amaranthus viridis, Amaranthus albus,* Amaranthus blitoides, *Amaranthus blitum, Amaranthus caudatus, Amaranthus cruentus, Amaranthus gangeticus, Amaranthus graecizans, Amaranthus hybridus, Amaranthus oleraceus, Amaranthus paniculatus, Amaranthus retroflexus, Amaranthus salicifolius, Amaranthus spinosus* et *Amaranthus tricolour.*

3. Méthode selon l'une quelconque des revendications 1 et 2 comprenant les étapes suivantes:
i. récupération du sol dans lequel *Amaranthus spp* est en train de pousser,
ii. mélange dudit sol avec du compost,
iii. plantation de la plante maraichère dans ledit mélange,
iv. croissance de ladite plante maraîchère et,
v. récolte de la plante.

4. Méthode selon l'une quelconque des revendications 1 à 3, dans laquelle la plante maraîchère est choisie parmi le groupe comprenant des plantes d'espèces non légumineuses qui ne sont pas non hautements dépendante des champignons mycorhiziens arbusculaires et toutes les espèces de plantes non mycotrophiques.

5. Méthode selon l'une quelconque des revendications 1 à 4, dans laquelle le ratio compost/sol est compris entre 90/10 et 95/5 (v/v).

6. Composition biofertilisante comprenant un mélange de compost et de sol dans lequel *Amaranthus spp* a été préalablement cultivé.

7. Composition biofertilisante selon la revendication 6 dans laquelle le ratio compost/sol est compris entre 90/10 et 95/5 (v/v).
